# EUROPEAN PATENT SPECIFICATION

(11) **EP 4 428 766 B1**
(45) Date of publication and mention of the grant of the patent: **28.10.2026**
(21) Application number: 23160990.0
(22) Date of filing: 09.03.2023
(51) Int. Cl.: G06N 10/40

(54) **SUPERCONDUCTING QUANTUM CIRCUIT AND QUANTUM INFORMATION PROCESSING HARDWARE**
SUPRALEITENDE QUANTENSCHALTUNG UND QUANTENINFORMATIONSVERARBEITUNGSHARDWARE
CIRCUIT QUANTIQUE SUPRACONDUCTEUR ET MATÉRIEL DE TRAITEMENT D'INFORMATIONS QUANTIQUES

(43) Date of publication of application: 11.09.2024
(73) Proprietor: Karlsruher Institut für Technologie, 76131 Karlsruhe (DE)
(72) Inventor: Pop, Ioan M., 76133 Karlsruhe (DE); Geisert, Simon, 76139 Karlsruhe (DE); Ihssen, Sören, 76131 Karlsruhe (DE); Winkel, Patrick, 76275 Ettlingen (DE); Spiecker, Martin, 76137 Karlsruhe (DE); Wernsdorfer, Wolfgang, 76137 Karlsruhe (DE)
(74) Representative: Müller-Boré & Partner Patentanwälte PartG mbB

(56) References cited:
- LUKAS GRÜNHAUPT ET AL: "Granular aluminum: A superconducting material for high impedance quantum circuits", ARXIV.ORG, CORNELL UNIVERSITY LIBRARY, 201 OLIN LIBRARY CORNELL UNIVERSITY ITHACA, NY 14853, 27 September 2018 (2018-09-27), XP081460513, DOI: 10.1038/S41563-019-0350-3
- PATRICK WINKEL ET AL: "Implementation of a transmon qubit using superconducting granular aluminum", ARXIV.ORG, CORNELL UNIVERSITY LIBRARY, 201 OLIN LIBRARY CORNELL UNIVERSITY ITHACA, NY 14853, 6 November 2019 (2019-11-06), XP081526162

## Description

### Technical Field

The following description relates to superconducting quantum circuits and to quantum information processing hardware comprising the superconducting circuits.

### Background

The basic unit of quantum information is a quantum bit or qubit, which can have various physical implementations in the form of a circuit, such as the flux qubit. In order to measure the state of a qubit, a readout circuit is needed. The coupling between the qubit circuit and the readout circuit can be either inductive or capacitive. In the case of inductive coupling, an undesired spurious capacitive coupling is also present. Conventionally, electric fields can be screened by conducting planes or ground planes in which the circuit might be embedded in order to minimise this spurious capacitive coupling. However, these screening techniques introduce structural and technological limitations and do not completely eliminate the spurious capacitive coupling.

The document "Granular aluminum: A superconducting material for high impedance quantum circuits" by L. Grünhaupt et al. describes a fluxonium qubit design using a granular aluminum superinductor strip. Granular aluminum self-assembles into an effective junction array with a remarkably high kinetic inductance, and its fabrication can be in-situ integrated with standard aluminum circuit processing.

### Summary

It is an object of the invention to achieve a purely inductive coupling between a qubit circuit and a readout circuit, i.e., to eliminate the spurious capacitive coupling without employing such screening techniques.

The achievement of this object in accordance with the invention is set out in the independent claims. Further developments of the invention are the subject matter of the dependent claims.

According to one aspect, a superconducting quantum circuit (also referred to as "qubit-readout circuit") is provided. The superconducting quantum circuit comprises:
- a nonlinear element, wherein the nonlinear element is a Josephson junction;
- a first wiring section having a first end and a second end, wherein both the first end and the second end are connected to the nonlinear element;
- a conductive element;
- a second wiring section connecting the conductive element to the first wiring section;
- a first capacitive element and a second capacitive element identical to the first capacitive element;
- a third wiring section connecting the first capacitive element to the first wiring section; and
- a fourth wiring section connecting the second capacitive element to the first wiring section;
wherein:
the nonlinear element, the first wiring section, the conductive element, the second wiring section, the first capacitive element (150), the third wiring section and the fourth wiring section exhibit superconductive behaviour at an operating temperature of 4 K or less;
the first capacitive element and the second capacitive element are arranged such that a symmetry line equidistant from the first capacitive element and the second capacitive element intersects the nonlinear element;
the first wiring section is bisected into a first branch and a second branch by the symmetry line, the first branch being geometrically identical to the second branch;
the first branch has a first kinetic inductance, the second branch has a second kinetic inductance, and the first kinetic inductance is different from the second kinetic inductance;
the second wiring section substantially lies on the symmetry line and does not contact the nonlinear element; and
the conductive element is bisected by the symmetry line.

Based on said characteristics of the superconducting quantum circuit, it is possible to provide a superconducting quantum circuit which allows purely inductive coupling between qubit mode and the readout mode. Said in other terms, the superconducting quantum circuit allows a purely inductive coupling between the qubit mode and the readout mode, considering that the state of the superconducting quantum circuit is given by a superposition of these two electromagnetic modes. "Purely inductive coupling" between the qubit mode and the readout mode means that the capacitance matrix in the basis of these modes is diagonal, while the inductance matrix is not. **In** other words, the capacitive coupling is eliminated by introducing a symmetric capacitance matrix. At the same time, inductive coupling is enabled by introducing an asymmetry in these branches, which is implemented by using two materials of different kinetic inductance and/or different ratios in the implementation of the total length of the wire in the two branches. Notably, the asymmetry introduced for the inductive coupling does not break the symmetry of the capacitance matrix. As a result, the present invention enables a wide tunability of the coupling between the modes by designing the branch asymmetry in terms of kinetic inductance without any spurious capacitive coupling.

The quantum circuit is superconducting in that all components of the superconducting quantum circuit are superconducting. The components of the superconducting quantum circuit exhibit superconductive behaviour at the operating temperature of the superconducting quantum circuit. The operating temperature is 4 K or less, more preferably 10 mK or less. The lower limit is not particularly limited and may be 5 mK for instance.

The superconducting quantum circuit is a planar circuit. For instance, the superconducting quantum circuit may be formed on a substrate. The thickness of the components of the superconducting quantum circuit is not specifically limited and may be between about 15 nm and about 200 nm as measured from the surface of the substrate. Exemplarily, some parts of the superconducting quantum circuit may be formed by depositing a plurality of layers of one or more materials; in this case the thickness may be between about 30 nm and 180 nm. Other parts of the superconducting quantum circuit may be formed by depositing a single layer of a material; in this case the thickness may be between 20 nm and 90 nm.

The superconducting quantum circuit is a circuit that allows storage of quantum information in the form of a qubit state as well as a measurement or readout of the qubit state. A qubit is a two-level quantum-mechanical system, whose state |*x*〉 can be written as a superposition of the eigenstates |0〉 and |1〉, which can be expressed as follows using the Bloch sphere representation: $\left|x\right〉 = cos \frac{θ}{2} \left|0\right〉 + {e}^{iφ} sin \frac{θ}{2} \left|1\right〉$ with *θ*, $φ ∈ ℝ$*.*

Accordingly, the superconducting quantum circuit may be considered as the result of the coupling between (1) a qubit circuit that realises the two-level quantum-mechanical system and that can be subjected to quantum computational operations that modify its state and (2) a readout circuit that enables to determine the qubit state.

The qubit circuit comprises the nonlinear element and the first wiring section.

The nonlinear element is an electrical component that enables a flow of current through it and exhibits two properties, non-dissipation and nonlinearity. The element is non-dissipative according to Ohm's law since it is superconductive, namely an electrical current across the element persists even without an externally applied voltage. Nonlinearity generally indicates that the output and the input of the element are not in a linear relation. Specifically, in this case, the electrical current flowing across the element does not increase linearly with the physical quantity that determines the flow of current. As a consequence, the discrete energy spectrum of a system comprising the element has energy levels that are not evenly distributed, i.e., the transition frequencies between different pairs of energy levels are different. Therefore, a specific energy level can be manipulated without also modifying the populations of the other energy levels.

The nonlinear element is a Josephson junction. A Josephson junction comprises two superconductors connected by a weak link, i.e., a non-superconducting portion, such as a thin insulating layer or non-superconducting metal. For instance, the superconductors may be made of aluminium and the non-superconducting material may be an aluminium oxide.

A characteristic length of the nonlinear element may be less than about 3 µm, or, more particularly less than about 1 µm. The characteristic length may be at least about 15 nm. For the case of the Josephson junction, the characteristic length of the nonlinear element may be given by the thickness of the two superconducting electrodes and the thickness of the non-superconducting portion.

In the present description, the term "wiring section" indicates a finite portion of wiring between a first end and a second end having superconductive properties, wherein the electrical current can flow from the first end to the second end. The width of the various wiring sections discussed herein may vary between about 10 nm and about 10 µm.

Both the first end and the second end of the first wiring section are connected to the nonlinear element. In other words, the first wiring section together with the nonlinear element form a loop (i.e., a closed path), which may be referred to as "qubit loop". The distance between the first end and the second end of the first wiring section may correspond to the characteristic length of the nonlinear element.

The loop may have different shapes as long as it has at least one symmetry axis passing through the nonlinear element, as discussed below. For instance, the qubit loop may have a rectangular or square shape. A total length of the first wiring section may be between about 1 µm and about 10 mm, more particularly between about 100 µm and about 1 mm, for example about 300 µm.

The first wiring section functions as an inductive shunt that decreases the sensitivity of the qubit circuit to charge noise. The inductance of the first wiring section may be determined by the geometry of the wiring (e.g. width and length) as well as by the material. Exemplarily, the first wiring section may be made at least in part of a material with high kinetic inductance. As used herein, "high kinetic inductance" indicates a kinetic sheet inductance greater than about 0.05 nH/□, more particularly greater than about 0.1 nH/□. An exemplary material with high kinetic inductance is a granular superconductive material. The wording "granular" used herein means being composed of small, discrete entities.

Exemplarily, the granular superconductive material may be a composite material containing metal grains embedded in a metal oxide matrix. In particular, the metal in the metal grains and the metal in the metal oxide matrix may be the same. For example, the metal may be one of aluminium, indium, tantalum, gallium, and rhenium. Preferably, the metal in the metal grains and in the metal oxide matrix is aluminium. The metal grains may have a grain size in the range of from 1 nm to 10 nm, preferably from 2 nm to 7 nm. The grain size can be measured by using dark-field electron microscopy, as described in e.g. G. Deutscher et al., J. Low. Temp. Phys. 10, 231-243 (1973). According to an example, the individual grains of the composite material agglomerate into larger effective grains due to charging effects. For instance, the size of an effective grain may be 50 nm or less.

The superconducting quantum circuit further comprises the readout circuit comprising the conductive element and the second wiring section. The conductive element is made of a superconducting metal, e.g. of aluminium or of aluminium and granular aluminium (for instance, two superimposed aluminium layers that shunt an overlying layer of granular aluminium). The conductive element is configured to couple to a readout port, e.g. via a Purcell filter resonator, as discussed below. The conductive element may be implemented in a variety of configurations, as long as it allows coupling to the readout port and satisfies the symmetry requirement discussed below. For instance, the conductive element may comprise one or more wiring sections and/or a circular element, e.g. a circular pad, as discussed further below.

The first end of the second wiring section is connected to the conductive element and the second end of the second wiring section is connected to the first wiring section. The second wiring section may have at least a part made solely of a material having a high kinetic inductance, e.g. granular aluminium. The total length of the second wiring section may be between about 1 µm and about 1 mm, in particular between about 10 µm and about 100 µm, for example about 50 µm.

The second wiring section may be straight. In particular, in the context of this description, the term "straight" refers to a piece of wiring whose shape can be approximated by a line segment and is meant to account for small deviations from the linear shape.

The superconducting quantum circuit further comprises two identical capacitive elements, the first capacitive element and the second capacitive element. A capacitive element is an electrical component capable of storing electric charge, a property called capacitance, which is inherent to conductors. The first and second capacitive element are identical in that they have the same electrical properties, specifically the same self-capacitance. In particular, the first and second capacitive element may be made of the same material (e.g. aluminium or aluminium and granular aluminium, for instance, two superimposed aluminium layers that shunt an overlying layer of granular aluminium) and may have the same geometry (e.g. rectangular).

In one example, each capacitive element may be formed as a rectangular strip having a length between about 60 µm and about 160 µm, in particular between about 80 µm and about 140 µm, for example about 110 µm, and a width between about 15 µm and about 40 µm, in particular between about 20 µm and about 35 µm, for example about 28 µm. For instance, the rectangular strips may be arranged parallel to one another, e.g. their long sides may be parallel, thereby forming a capacitor as a pair of parallel coplanar strips. In another example, each capacitive element may have a complex shape, e.g. each capacitive element may comprise two parallel stripes connected to each other by a transversal portion, wherein one stripe is longer than the other and comprises a protrusion. These capacitive elements may be arranged such that the transversal portions are parallel to each other and to the symmetry line discussed below, so that the pair of longer stripes is aligned and the pair of shorter stripes is aligned.

The first capacitive element is connected to the first wiring section by the third wiring section and the second capacitive element is connected to the first wiring section by the fourth wiring section. In particular, a first end of the third wiring section is connected to the first wiring section and a second end of the third wiring section is connected to the first capacitive element. Similarly, a first end of the fourth wiring section is connected to the first wiring section and a second end of the fourth wiring section is connected to the second capacitive element. The third wiring section and the fourth wiring section may also be identical, namely have the same geometry and be formed from the same material, a superconducting material such as aluminium or aluminium and granular aluminium (for instance, two superimposed aluminium layers that shunt an overlying layer of granular aluminium). Exemplarily, both the third wiring section and the fourth wiring section may be straight. For instance, the third wiring section and the first wiring section may be parallel to each other.

The first capacitive element and the second capacitive element, together with the third and fourth wiring sections, are part of both the qubit circuit and the readout circuit. Indeed, the first capacitive element is connected to the conductive element via the third wiring section, the first wiring section and the second wiring section, while the second capacitive element is connected to the conductive element via the fourth wiring section, the first wiring section and the second wiring section.

The readout circuit acts as a resonant circuit characterised by the inductance of the second wiring section plus the effective inductance of the first wiring section and the capacitance between the first capacitive element and the conductive element as well as the capacitance between the second capacitive element and the conductive element. The resonance frequency of the readout circuit is modified in virtue of its coupling to the qubit loop, specifically the readout circuit has a first resonance frequency if the qubit state is the ground state and a second resonance frequency if the qubit state is the (first) excited state. The difference between the first resonance frequency and the second resonance frequency is referred to as dispersive shift. Accordingly, by determining the resonance frequency of the readout circuit, it is possible to determine the qubit state.

Hence, as part of the readout circuit, the first capacitive element and the second capacitive element provide the capacitive component of the resonant circuit. As part of the qubit circuit, the first capacitive element and the second capacitive element form a shunt capacitor for the qubit loop, which decreases charge noise sensitivity.

Indeed, the first capacitive element is connected to the nonlinear element via the third wiring section and the first wiring section, while the second capacitive element is connected to the nonlinear element via the fourth wiring section and the first wiring section. In particular, the third wiring section and the fourth wiring section may be positioned such that their respective connection points (e.g. their respective first ends) to the first wiring section lie on opposite sides of the nonlinear element. In other words, the portion of first wiring section between the two connection points is the one interrupted by the nonlinear element. The distance between the two connection points may be such that the mutual capacitance between the first capacitive element and the second capacitive element is sufficient for the capacitive elements to function as a shunt capacitor. For example, the distance between the two connection points may be between about 10 µm and about 30 µm, in particular between about 15 µm and about 25 µm, for example about 20 µm.

Specifically, the first capacitive element and the second capacitive element are arranged such that a symmetry line equidistant from the first capacitive element and the second capacitive element intersects the nonlinear element. In other words, the connection point of the third wiring section to the first wiring section and the connection point of the fourth wiring section to the first wiring section are equidistant from the nonlinear element.

It should be noted that the symmetry line is an abstract geometrical entity that is used as aid in describing the arrangement of the components of the superconducting quantum circuit, and the symmetry line is not an actual component of the circuit.

The symmetry line is a symmetry axis not only for the first and second capacitive elements, but also for the first wiring section. Indeed, the first wiring section is bisected into a first branch and a second branch by the symmetry line, the first branch being geometrically identical to the second branch. In particular, the geometrical shape of the first branch is the same as the geometrical shape of the second branch and the length of the first branch is identical to the length of the second branch. Exemplarily, if the qubit loop has a rectangular shape, the symmetry line may coincide with one of the two lines of reflectional symmetry of the rectangle.

However, the first branch and the second branch differ in their kinetic inductance. In particular, the first branch has a first kinetic inductance, the second branch has a second kinetic inductance, and the first kinetic inductance is different from the second kinetic inductance. Exemplarily, the difference between the first kinetic inductance and the second kinetic inductance may be between about 0.01 nH and about 10 nH, in particular between about 0.1 nH and about 1 nH, for example about 0.25 nH. In particular, since the difference between the first kinetic inductance and the second kinetic inductance determines the coupling between the qubit mode and the readout mode, its value should be much smaller than the total inductance of the qubit and readout modes, e.g. the ratio between (1) the difference between the first kinetic inductance and the second kinetic inductance and (2) the total inductance of the qubit and readout modes may be less than 0.1.

The difference in kinetic inductance may be implemented in various ways.

**In** a particular example, the first wiring section may be made of a first material and a second material, the first material having a kinetic inductance different from the kinetic inductance of the second material. For instance, the first material may have a higher kinetic inductance than the second material. **In** some examples, the first material may have a high kinetic inductance, while the second material may not. For instance, the first material may be a granular superconducting material (e.g. granular aluminium) and the second material may not be a granular superconducting material (e.g. aluminium).

Different portions of the first wiring section may have different compositions. Higher-inductance portions and lower-inductance portions may be identified, wherein the higher-inductance portions have a higher kinetic inductance than the lower-inductance portions. **In** particular, a "higher-inductance portion" may be a portion made only from the first material while a "lower-inductance portion" may be made only from the second material or may be made from both the first material and the second material combined such that the overall inductance is lower than the inductance of the first material. For example, a lower-inductance portion may be made of a layer of the first material shunted by one or more layers of the second material. Higher-inductance portions and lower-inductance portions may be generally identified in the whole superconducting quantum circuit. Exemplarily, higher-inductance portions may have a high kinetic inductance, while lower-inductance portions may not have a high kinetic inductance.

**In** one case, the first branch may consist of a higher-inductance portion and the second branch may consist of a lower-inductance portion. For instance, the first branch may be made only of the first material and the second branch may be made only of the second material.

**In** another case, both branches may comprise both higher-inductance portions and lower-inductance portions. **In** particular, a first ratio of the amount of first material to the amount of second material in the first branch may be different from a second ratio of the amount of first material to the amount of second material in the second branch. For instance, the first branch may comprise a first higher-inductance portion and the second branch may comprise a second higher-inductance portion, wherein the first higher-inductance portion has greater length than the second higher-inductance portion.

In another example, the first wiring section may be composed of a single material whose kinetic inductance can be manipulated, so that different portions of the first wiring section can have different kinetic inductance. For instance, the oxidation level in the metal oxide matrix of a granular superconductive material such as granular aluminium may be modified to obtain different kinetic inductances.

More generally, the superconducting quantum circuit as a whole is substantially geometrically symmetric with respect to the symmetry line. Said otherwise, the symmetry line divides the superconducting quantum circuit into two parts that are substantially geometrically identical to each other.

The second wiring section substantially lies on the symmetry line. In particular, the connection point between the second wiring section and the first wiring section (e.g. the second end of the second wiring section) may lie on the symmetry line.

The second wiring section does not contact the nonlinear element. In other words, the connection point between the second wiring section and the first wiring section is between the first branch and the second branch. Thus, each branch may be considered delimited by the nonlinear element and the connection point between the second wiring section and the first wiring section.

This also means that the second wiring section is on an opposite side of the qubit loop with respect to the third wiring section and fourth wiring section, as already mentioned above. Exemplarily, if the qubit loop has a rectangular shape, the second wiring section may be connected to one of the long sides and the third and fourth wiring sections may be connected to the other long side.

If the qubit loop has a shape with at least two opposing straight sides to which the second, third and fourth wiring sections are connected, the second wiring section may form a substantially right angle with the first wiring section and/or the third and fourth wiring sections may form respective substantially right angles with the first wiring section. A substantially right angle may be in the range between about 89° and about 91°.

Considering a spatial direction along the symmetry line, the components of the superconducting quantum circuit are arranged in a spatial sequence starting from the conductive element and ending with the first and second capacitive elements. The ordered sequence may be as follows: the conductive element (in case of an extended conductive element as discussed below, its portion directly adjacent to the second wiring section), the second wiring section, the first wiring section, the pair of the third and fourth wiring sections and the pair of the first and second capacitive elements.

The conductive element is bisected by the symmetry line, i.e., the conductive element is also symmetric with respect to the symmetry line. Thus, the symmetry line bisects the conductive element into a first portion and a second portion geometrically identical to each other. Furthermore, the first and second portions may have identical electrical properties. The first and second portions may be made of the same material, e.g. aluminium or aluminium and granular aluminium (for instance, two superimposed aluminium layers that shunt an overlying layer of granular aluminium).

The characteristics of the superconducting quantum circuit discussed above enable a purely inductive coupling between qubit circuit and the readout circuit. Said in other terms, the superconducting quantum circuit allows a purely inductive coupling between the qubit mode and the readout mode, considering that the state of the superconducting quantum circuit is given by a superposition of these two electromagnetic modes. "Purely inductive coupling" between the qubit mode and the readout mode means that the capacitance matrix in the basis of these modes is diagonal, while the inductance matrix is not. In other words, the capacitive coupling is eliminated.

The absence of capacitive coupling is a result of the geometrically symmetric design of the superconducting quantum circuit, together with the fact that the conductive element is used as one electrode of the readout circuit and the capacitive elements are used as the other electrode. Specifically, it is ensured that the mutual capacitance between each one of the capacitive elements and the conductive element is the same, i.e., the mutual capacitance between the first capacitive element and the conductive element is the same as the mutual capacitance between the second capacitive element and the conductive element. The elimination of spurious capacitive coupling reduces relaxation of the qubit state to the readout port via electrical interaction.

With the described arrangement of the components of the superconducting quantum circuit, three active nodes can be identified: a first node at the connection between the second wiring section and the conductive element, a second node at the connection between the third wiring section and the first wiring section and a third node at the connection between the fourth wiring section and the first wiring section.

In conventional qubit-readout circuits, the readout circuit is an antenna having two active nodes and the qubit loop has two active nodes, for a total of four active nodes. In these conventional circuits, the readout mode charges the antenna from end to end, but there is also a parasitic mode, charging the antenna as a whole in opposition to both qubit loop nodes simultaneously. In contrast to this, according to the invention, the antenna is "collapsed" into the conductive element, effectively removing one node. This eliminates the readout mode of conventional designs and exploits what is the "parasitic" mode in conventional designs as actual readout mode.

Accordingly, the structure of the readout circuit eliminates the parasitic coupling by removing a degree of freedom associated with the readout circuit. Another positive consequence of this is a greater freedom of design for the readout structure, in particular allowing the first and second capacitive elements as well as the conductive element to be less restricted in size without introducing a parasitic mode.

In order to maintain the geometrical symmetry necessary for removing the capacitive coupling, while achieving inductive coupling, an asymmetry in kinetic inductance is introduced by having the first wiring section made up of two geometrically identical branches having different kinetic inductances. To maintain a perfectly diagonal capacitance matrix, the asymmetry of the two branches must only affect the inductance and not the capacitance. This is achieved by using materials with different kinetic inductance, e.g. granular aluminium and aluminium, and allows for almost arbitrary inductive asymmetries whereas the geometry of the wires stays the same and, hence, no capacitive asymmetry is induced. **In** other words, the shared inductance between the qubit mode and the readout mode can be engineered by adapting the difference of the inductances of the two branches without destroying the capacitive symmetry of the circuit.

**It** is noted that, while from the theoretical point of view of electromagnetism, capacitive and inductive coupling are dual, from a practical point of view, a greater tunability is only possible when using inductive coupling. Thanks to the first and second branches of the first wiring section, a high tunability can be achieved. "Tunability" refers to the capability of tuning the dispersive shift and a higher/lower tunability corresponds to a wider/narrower range for the dispersive shift.

Furthermore, as explained, controlled inductive coupling can be achieved via small asymmetries in the circuit, which can leave the geometry of the circuit completely unchanged. This is advantageous in the design of circuits, especially in the case of compact and crowded circuitry, where changing the geometry or the dimensions of an element can have detrimental effects in a finely tuned environment.

A further advantage of purely inductive coupling is that it enables a robust modelling and engineering of coupled qubit/readout circuits using lumped element models. This avoids the extensive use of finite element simulators which are costly in terms of time and computational resources.

Moreover, the absence of spurious capacitive coupling enables a versatile use of the circuit as the qubit does not couple capacitively to the environment via the readout mode. This enables qubit coherence in scaled-up three-dimensional architectures.

**It** is emphasised that the absence of a spurious capacitive coupling in the superconducting quantum circuit described herein is achieved without screening components. Since screening is never perfect, only a minimization of spurious coupling is possible, while the superconducting quantum circuit described herein enables perfect cancellation of spurious coupling.

In a particular example, the conductive element may comprise an enclosing portion. The enclosing portion of the conductive element may have a shape and size such that an area defined by the extent of the enclosing portion along the direction of the symmetry line and by the extent of the enclosing portion along the direction perpendicular to the symmetry line on the plane accommodates at least the second wiring section, the first wiring section and the nonlinear element. Accordingly, the extent of the enclosing portion along the direction perpendicular to the symmetry line on the plane may be greater than the extent along the same direction of the first wiring section, i.e., of the qubit loop. Furthermore, the extent of the enclosing portion along the direction of the symmetry line may be greater than the extent along the same direction of the second wiring section and the first wiring section combined.

In a further particular example, the area may further accommodate the third wiring section, the fourth wiring section, the first capacitive element and the second capacitive element. In this case, the extent of the enclosing portion along the direction perpendicular to the symmetry line on the plane may also be greater than the sum of the distance between the capacitive elements and twice the extent of a capacitive element along the direction perpendicular to the symmetry line. Furthermore, the extent along the direction of the symmetry line may be greater than the extent along the same direction of the second wiring section, the first wiring section, the third wiring section and the first capacitive element combined. It is noted that the latter extent is identical to the extent of second wiring section, the first wiring section, the fourth wiring section and the second capacitive element combined in virtue of the symmetry of the superconducting quantum circuit. The area is not completely enclosed by the enclosing portion. The area may be surrounded on three sides by the enclosing portion. Thus, generally, the enclosing portion may have an open shape. Exemplarily, the enclosing portion may have a U-shape or square-U-shape. For instance, the enclosing portion may comprise the circular element and two identical arms that are 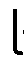 -shaped or L-shaped connected at opposite points of the circular element. In another instance, the enclosing portion may comprise the two identical arms connected to each other, without the circular element. As already explained above, the enclosing portion is bisected by the symmetry line.

The advantageous effect of the particular example in which the conductive element comprises an enclosing portion that "encloses" at least part of the other elements of the superconducting quantum circuit, in particular the qubit loop, is protection from electric stray fields. This further ensures the capacitive symmetry of the superconducting quantum circuit.

In some examples, the conductive element may consist of the enclosing portion, wherein the enclosing portion may or may not include the circular element. In other examples, the conductive element may comprise the enclosing portion, wherein the enclosing portion does not include the circular element, the circular element and a fifth wiring section connecting the circular element to the enclosing portion. The fifth wiring section may be straight and lie on the symmetry line. The circular element may be skeletonised (or fragmented) to prevent flux trapping. Generally, the circular element may dominate the capacitive coupling with the readout port (e.g. with a control circuit, such as a Purcell filter resonator, connected to the readout port). Herein, "skeletonised" refers to a configuration of the circular element, among possible configurations having all the given capacitive coupling, that minimises the area covered by superconducting material to avoid flux confinement. For instance, continuous areas of superconducting material larger than 40x40 µm² are avoided. Furthermore, a skeletonised conductive element does not comprise any closed paths (or "loops").

For instance, the circular element may comprise wiring in the shape of: a cross structure having four bars extending from a core, wherein each bar is perpendicular to its adjacent bars, and a plurality of discontinuous circles arranged concentrically, wherein each discontinuous circle comprises four separated arcs and each arc is connected to a respective bar. A discontinuous circle is a set of circular wiring sections (the arcs) that are disconnected from each other but that are arranged along the pattern of a circle.

In yet other examples, the conductive element may comprise only the circular element, e.g. the circular pad.

The extent of the conductive element along the direction of the symmetry axis may be greater than the extent of the conductive element along the direction perpendicular to the symmetry line. For instance, the extent of the conductive element along the direction of the symmetry axis may be between about 10 µm and about 1000 µm, in particular between about 300 µm and about 900 µm, for example about 600 µm. The extent of the conductive element along the direction perpendicular to the symmetry line may be between about 10 µm and about 1000 µm, in particular between about 100 µm and about 300 µm, for example about 200 µm.

The superconducting quantum circuit may be formed on a substrate. Examples of suitable materials for the substrate include silicon, silicon carbide, germanium, silicon germanium, silicon-germanium-carbon, Si alloys, Ge alloys, III-V materials such as gallium arsenide, indium phosphide, aluminium arsenide, and indium arsenide, II-VI materials such as cadmium selenide, cadmium sulfide, cadmium telluride, zinc oxide, zinc selenide, zinc sulfide, and zinc telluride, sapphire, and quartz, or any combination thereof. Preferably, the substrate is sapphire or silicon, since said substrate materials are proven to have low dielectric losses. Most preferably, the substrate is a sapphire wafer. Accordingly, another aspect of the present invention relates to a readout-qubit chip comprising a substrate and the superconducting quantum circuit, wherein the superconducting quantum circuit is formed on the substrate.

Yet another aspect of the present invention relates to a device comprising at least one readout-qubit chip according to the previous aspect positioned at a first level; at least one control chip positioned at a second level, the control chip comprising one or more control circuits configured to enable manipulation of a state of the superconducting quantum circuit and to enable readout of the state of the superconducting quantum circuit; wherein: the first level is separated from the second level by a separation distance, and a surface of the at least one readout-qubit chip on which the superconducting quantum circuit is formed faces a surface of the control chip on which the one or more control circuits are formed.

In particular, the substrate of readout-qubit chip may comprise a first surface and a third surface parallel to the first surface and the superconducting quantum circuit may be formed on the first surface, e.g. by means of metal deposition. Similarly, the control chip may comprise a substrate having a second surface and a fourth surface parallel to the second surface and the one or more control circuits may be formed on the second surface, e.g. by means of metal deposition. The readout-qubit chip and the control chip are arranged such that the first surface and the second surface face each other and the distance between the first surface and the second surface is the separation distance. In particular, the readout-qubit chip and the control chip may be substantially parallel to each other, i.e., the separation distance may be substantially constant over the surfaces of the chips. Exemplarily, the separation distance may be between about 1 µm and about 100 µm, in particular between about 40 µm and about 60 µm, for example about 50 µm.

This means that the device is configured such that it is possible to arrange the readout-qubit chip(s) and the control chip(s) at two different levels separated by the separation distance. For instance, the device may comprise at least one first supporting structure configured to support at least one control chip at the second level and at least one second supporting structure configured to support at least one readout-qubit chip at the first level. For instance, considering a vertical axis parallel to the direction of the Earth's gravitational pull, the second level may be lower than the first level. The second supporting structure may comprise e.g. a plurality of raised features, which are elevated with respect to the first supporting structure. In case the device comprises a plurality of readout-qubit chips and a plurality of control chips, the device is configured such that each readout-qubit chip is at the first level and each control chip is at the second level. In such a case, for example, the number of control chips may be equal to the number of readout-qubit chips.

Exemplarily, the device may comprise a body made of copper, wherein the body comprises a surface having at least one recess configured to accommodate the at least one control chip and at least one plurality of protrusions adjacent to the at least one recess configured to accommodate the at least one readout-qubit chip. The body may comprise a cavity below the recess, which reduces the capacitance to ground. It should be noted that the device does not comprise a printed a circuit board.

As mentioned, the one or more control circuits are structures for addressing the superconducting quantum circuit for readout as well as flux control (i.e., manipulation of the qubit state). In particular, the one or more control circuits are configured to act as intermediaries and couple the superconducting quantum circuit to the input ports for readout and flux control, respectively. Through the readout port, reflection measurements are performed to dispersively readout the qubit state by probing the readout circuit. Through the flux control port, direct currents are applied for flux biasing the qubit loop. Exemplarily, the control chip may be wire bonded to a first coaxial cable and a second coaxial cable, wherein the coaxial cables are configured to enable radiofrequency transmission.

The first level may be considered as defining a first plane, namely the plane on which the first surface lies, and the second level may be considered as defining a second plane, namely the plane on which the second surface lies. **It** should be noted that the facing between a surface of the readout-qubit chip (e.g. the first surface) and a surface of the control chip (e.g. the second surface) implies that a projection of the first surface onto the second plane has a non-zero overlap with the second surface (or vice versa). More specifically, the relative position between the readout-qubit chip and the control chip is such that the superconducting quantum circuit is capacitively coupled to the one or more control circuits. In particular, the capacitive coupling has to be sufficient for the operations of the device. Exemplarily, the superconducting quantum circuit may at least partially overlap with the one or more control circuits (when projecting the first surface on the second plane).

In a particular example, the one or more control circuits may comprise a Purcell filter resonator configured to couple to the conductive element and to a readout port; and a flux bias circuit configured to couple to the first wiring section and to a flux control port.

In particular, the Purcell filter resonator may be capacitively coupled to the readout port and capacitively coupled to the conductive element of the superconducting quantum circuit. Exemplarily, the Purcell filter resonator may comprise a wiring section with a circular capacitor pad at each end. One capacitor pad may be connected to the inner conductor of the readout port coaxial cable via wire bonds. The other capacitor pad may couple to the readout circuit via its electrical field. In particular, the relative position between the superconducting quantum circuit and the Purcell filter resonator may be such that the capacitor pad and the conductive element correspond to each other, i.e., a projection of capacitor pad on the first plane overlaps with the conductive element (in particular its circular element). The capacitor may be skeletonised to prevent flux trapping, as discussed above for the conductive element.

The flux bias circuit may be galvanically coupled to the flux control port and inductively coupled to the first wiring section, or, more generally, to the qubit loop. Exemplarily, the flux bias circuit may comprise a metal layer connected to the inner conductor of the flux control port coaxial cable via wire bonds and a wiring section having both ends connected to the metal layer. Exemplarily, the wiring section may form an arc.

Accordingly, each control chip may comprise a Purcell filter resonator and a flux bias circuit.

In a particular example in which the device comprises at least one pair of readout-qubit chips positioned at the first level, the device may further comprise at least one coupling chip positioned at the second level, wherein the coupling chip is configured to couple the at least one pair of readout-qubit chips to each other. Accordingly, there may be a coupling chip for each pair of readout-qubit chips, in particular for each pair of adjacent readout-qubit chips. Thus, the number of coupling chips may be equal to the number of readout-qubit chips minus one.

In particular, the coupling chip may be capacitively coupled to the qubit circuits of the superconducting quantum circuits, e.g. by means of a capacitive bridge, so that the qubit circuits are coupled. The position of the coupler chip with respect to the two readout-qubit chips that it couples is such that the projection of the coupler chip on the first plane overlaps with both readout-qubit chips.

As an alternative to the three-dimensional architecture described above, the superconducting quantum circuit may be part of a coplanar waveguide architecture. Accordingly, yet another aspect of the invention relates to a device comprising a dielectric substrate, at least one superconducting quantum circuit as described herein, and one or more control circuits configured to enable manipulation of a state of the superconducting quantum circuit and to enable readout of the state of the superconducting quantum circuit; wherein the superconducting quantum circuit is formed on the dielectric substrate and the one or more control circuits are formed on the dielectric substrate so that the superconducting quantum circuit and the one or more control circuits are coplanar.

The one or more control circuits in the coplanar waveguide architecture may also comprise a Purcell filter resonator configured to couple to the conductive element and to a readout port and a flux bias circuit configured to couple to the first wiring section and to a flux control port.

### Brief Description of the Drawings

Details of exemplary embodiments are set forth below with reference to the exemplary drawings. Other features will be apparent from the description, the drawings, and from the claims. It should be understood, however, that even though embodiments are separately described, single features of different embodiments may be combined to further embodiments.
Figure 1a shows an exemplary qubit-readout circuit.
Figure 1b shows an enlargement of a portion of the exemplary qubit-readout circuit of Figure 1a.
Figure 2 shows a lumped-element model of the exemplary qubit-readout circuit of Figure 1a.
Figure 3 shows a plot of the dispersive shift as a function of the difference in kinetic inductance.
Figure 4 shows plots of the energy relaxation times and Ramsey decoherence times.

### Detailed Description

In the following, a detailed description of an example will be given with reference to the drawings. It should be understood that various modifications to the example may be made.

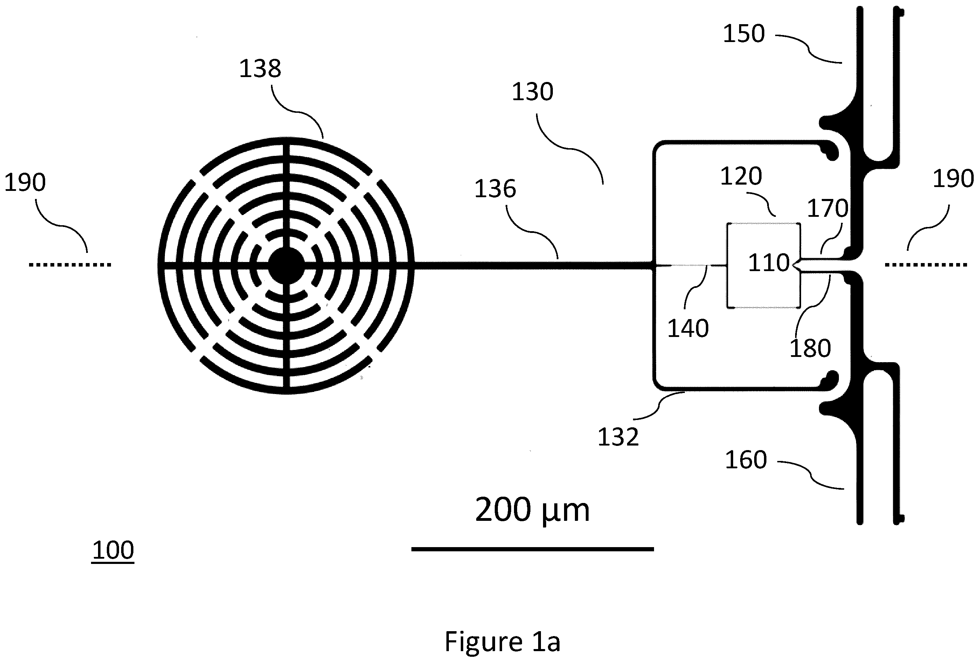

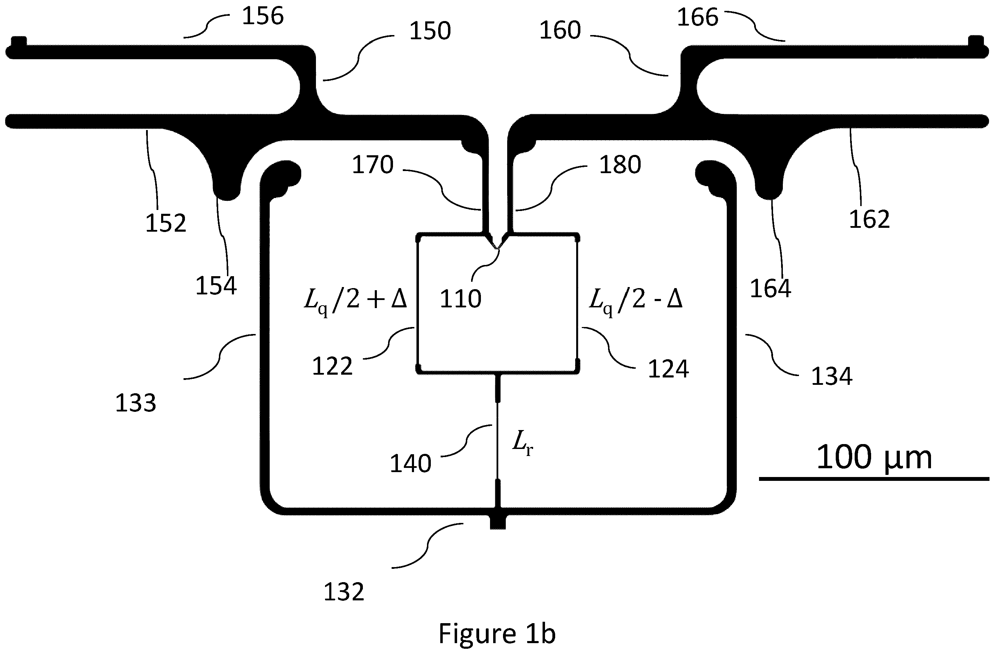

**Figure 1a** shows an exemplary qubit-readout circuit (or superconducting quantum circuit) 100 and **Figure 1b** shows an enlargement of a portion of the exemplary qubit-readout circuit 100 of Figure 1a. The superconducting quantum circuit 100 of Figure 1a comprises a nonlinear element 110, a first wiring section 120, a conductive element 130, a second wiring section 140, a first capacitive element 150, a second capacitive element 160, a third wiring section 170 and a first wiring section 180. The superconducting quantum circuit 100 is symmetric with respect to the symmetry line 190, of which only two segments are shown in Figure 1a for the sake of clarity of representation of the circuit.

The materials used for the qubit-readout circuit 100 are aluminium and granular aluminium (grAl). The superconducting quantum circuit 100 can be fabricated on a substrate via electron beam nanolithography of aluminium and three-angle shadow evaporation of grAl.

Considering a direction along the symmetry lines 190, the components of the superconducting quantum circuit 100 are arranged in a spatial sequence starting from the conductive element 130 and ending with the first and second capacitive elements 150, 160.

The conductive element 130 is formed by a layer of grAl and two layers of aluminium. The thickness of the first aluminium layer is 20 nm, the thickness of the second aluminium layer is 30 nm and the thickness of the grAl layer is 70 nm, so that the overall thickness of the wire is 120 nm. Exemplarily, the layer of grAl is on top of the two aluminium layers, however the order of the layers may be any permutation of the exemplary order. The width of the wire may vary in different parts and may generally be less than 5 µm. This wire configuration will be referred to in the following as "aluminium-shunted grAl". The wiring portions made of aluminium-shunted grAl are lower-inductance portions.

The conductive element 130 comprises a circular element 138, a fifth wiring section 136 and an enclosing portion 132. The wiring of the circular element 138 comprises a cross structure having four bars extending from a core, wherein each bar is perpendicular to its adjacent bars, so that there are two pairs of opposite bars, wherein the opposite bars are aligned. One pair may be along the symmetry line 190 while the other pair is on the direction perpendicular to the symmetry line 190. The wiring of the circular element 138 further comprises a plurality of (e.g. six) discontinuous circles arranged concentrically, wherein each discontinuous circle comprises four separated arcs and each arc is connected to a respective bar. Each arc may subtend an angle of 90°. The circular element 130 is bisected by the symmetry line 190. The overall length of a pair of opposite bars, which coincides with the diameter of the outermost discontinuous circle, is about 200 µm.

The fifth wiring section 136 is a straight portion of wire that lies on the symmetry line 190. Its first end is connected to one of the bars of the circular element 138 (such that the fifth wiring section 136 is the continuation of the bar), and its second end is connected to the enclosing portion 132. The length of the fifth wiring section 136 is about 200 µm.

The enclosing portion 132, as shown in Figure 1b, comprises a first arm 133 and a second arm 134, wherein the first arm 133 is identical to the second arm 134. Indeed, the enclosing portion 132 is bisected by the symmetry line 190 into the first arm 133 and the second arm 134. The enclosing portion 132 comprises a straight wiring segment perpendicular to the symmetry line 190, one half of which belongs to the first arm 133 and the other half of which belongs to the second arm 134. This wiring segment is connected to the fifth wiring section 136 and it is about 200 µm long. The enclosing portion 132 further comprises two straight wiring segments parallel to the symmetry line 190 (and to each other), each segment connected to a respective end of the wiring segment perpendicular to the symmetry line 190. Each parallel wiring segment belongs to a respective arm 133, 134 and is about 150 µm long.

Each arm 133, 134 is substantially L-shaped. The width of the wire at the terminal portion of each arm 133, 134 is thicker than in the rest of the enclosing portion 132, wherein the terminal portion is the part at the end of the parallel wiring segment (i.e. most distant from the perpendicular wiring segment) and having a length of e.g. about 1/8 of the overall length of the parallel wiring segment. Each terminal portion may have at least one round edge facing the respective capacitive element (e.g., each terminal portion may have a notehead-like shape). In particular, the terminal portion of each arm 133, 134 forms a capacitor with the first and second capacitive element 150, 160, respectively, as described below.

The superconducting quantum circuit 100 further comprises the second wiring section 140, which has one end connected to the conductive element 130 (in particular the fifth wiring section 136) and the other end connected to the first wiring section 120. The connection point between the second wiring section 140 and the conductive element 130 is hereinafter referred to as "first node". The second wiring section 140 is a straight portion of wire that lies on the symmetry line 190. The second wiring section 140 comprises a higher-inductance portion (hereinafter referred to as "third higher-inductance portion") with inductance *Lᵣ*. The third higher-inductance portion is made of granular aluminium wire with a thickness of 70 nm, a width of 200 nm and a sheet inductance of L_{□}=80±5 pH/□. The parts of the second wiring section 140 connecting the third higher-inductance portion to the rest of the circuit are lower-inductance portions made of aluminium-shunted grAl. The third higher-inductance portion of the second wiring section 140 has a length of about 35 µm, while the second wiring section 140 as a whole has a length of about 60 µm.

The superconducting quantum circuit 100 further comprises the first wiring section 120, which has a rectangular shape. The extent of the rectangle in the direction of the symmetry line 190 is about 60 µm and the extent of the rectangle in the other direction is about 70 µm. Both ends of the first wiring section 120 are connected to the nonlinear element 110, so that the first wiring section 120 and the nonlinear element 110 are referred to as "the qubit loop". The nonlinear element 110 is a Josephson junction, in particular a superconductor-isolator-superconductor junction, such as an Al/AlOx/Al junction.

It can be seen that the enclosing portion 132 of the conductive element 130 surrounds the qubit loop on three sides. In other words, the qubit loop is fully contained in the area defined by the extent of the enclosing portion 132 in the directions parallel and perpendicular to the symmetry line 190.

The first wiring section 120 is bisected by the symmetry line 190 into a first branch 122 and a second branch 124, which are shown in Figure 1b. The first branch 122 begins at the connection point between the second wiring section 140 and the first wiring section 120, and ends at one superconductor of the Josephson junction. The second branch 124 begins at the connection point and ends at the other superconductor of the Josephson junction.

The first wiring section 120 comprises a wiring segment perpendicular to the symmetry line 190 (which is connected to the second wiring section 140), two wiring segments parallel to the symmetry line 190 (and, thus, to each other), and two wiring segments perpendicular to the symmetry line 190 and aligned with each other, each connected to the nonlinear element 110.

The first branch 122 comprises a first higher-inductance portion with inductance *L_{q}*/2 *+* Δ. The first higher-inductance portion is made of granular aluminium wire with a thickness of 70 nm, a width of 200 nm and a sheet inductance of L_{□}=80±5 pH/□. The second branch 124 comprises a second higher-inductance portion with inductance *L_{q}*/2 - Δ. The second higher-inductance portion is made of granular aluminium wire with a thickness of 70 nm, a width of 200 nm and a sheet inductance of L_{□}=80±5 pH/□. The rest of the first wiring section 120 is made of lower-inductance portions in aluminium-shunted grAl.

The length of the first higher-inductance portion is greater than the length of the second higher-inductance portion, so that the first branch 122 has a first kinetic inductance higher than the second branch 124, wherein the difference is 2 Δ. A difference in length of about 2.6 µm translates into a difference in kinetic inductance of about 0.6 nH. In general, this ratio depends on the parameters of the used granular aluminium, such as oxidation and width.

The superconducting quantum circuit 100 further comprises the third wiring section 170 and the fourth wiring section 180, which connect the first wiring section 120 to the first capacitive element 150 and the second capacitive element 160, respectively. The connection point between the third wiring section 170 and the first wiring section 120 is hereinafter referred to as "second node", while the connection point between the fourth wiring section 180 and the first wiring section 120 is hereinafter referred to as "third node". The third wiring section 170 and the fourth wiring section 180 are symmetrically arranged on opposite sides of the symmetry line 190, wherein the distance between the third wiring section 170 and the first wiring section 180 is about 10 µm. The third wiring section 170 and the fourth wiring section 180 are identical to each other, so only the third wiring section 170 is described in the following. The third wiring section 170 is straight, has a length of about 40 µm and forms a right angle with the first wiring section 120. The third wiring section 170 is a lower-inductance portion made of aluminium-shunted grAl.

The superconducting quantum circuit 100 further comprises the first capacitive element 150 and the second capacitive element 160, which are symmetrically arranged on opposite sides of the symmetry line 190. Each capacitive element 150, 160 is a lower-inductance portion made of aluminium-shunted grAl. The first capacitive element 150 comprises a first stripe 152 and a second stripe 156. The stripes have a length greater than their width, wherein the length is in the direction perpendicular to the symmetry line 190. The first stripe 152 and the second stripe 156 are parallel to each other and connected to each other by a transversal portion. The distance between the first stripe 152 and the second stripe 156 is about 25 µm.

The first stripe 152 is connected to the third wiring section 170 and has a length of about 210 µm. The second stripe 156 begins at a distance of about 80 µm from the symmetry line 190 and extends then away from the symmetry line for about 135 µm. The first stripe 152 has a protrusion 154 extending in the direction of the symmetry line 190 toward the conductive element 130. This protrusion 154 is shaped so as to form a round edge with the rest of the stripe, wherein this round edge corresponds to the round edge of the terminal portion of the first arm 133. The distance between these rounds edges may be about 10 µm. The first capacitive element 150 (in particular the protrusion 154 of the first stripe 152) forms a capacitor with the terminal portion of the first arm 133.

The second capacitive element 160 is identical to the first capacitive element 150 and is simply mirrored with respect to the symmetry line 190. Accordingly, the description of the first capacitive element 150 applies analogously to the second capacitive element 160, which comprises first stripe 162 with protrusion 164 and second stripe 166, and which forms a capacitor with the terminal portion of the second arm 134.

Furthermore, the first capacitive element 150 and the second capacitive element 160 (in particular, their first stripes 152 and 162) also form a capacitor that shunts the qubit loop. The first capacitive element 150 and the second capacitive element 160 are arranged such that their first stripes 152 and 162 are aligned, and their second stripes 156 and 166 are aligned, while the transversal portions are parallel to each other and to the symmetry line 190.

The first capacitive element 150 and the second capacitive element 160 may also be used to capacitively couple the superconducting quantum circuit 100 with other identical superconducting quantum circuits. For instance, a superconducting quantum circuit 100 may be coupled to two neighbouring superconducting quantum circuits, one on each side of the symmetry line 190.

It is noted that, while for descriptive purposes the superconducting quantum circuit 100 has been "split" into various separate components, all the components are connected to each other, directly or indirectly, i.e. via other components.

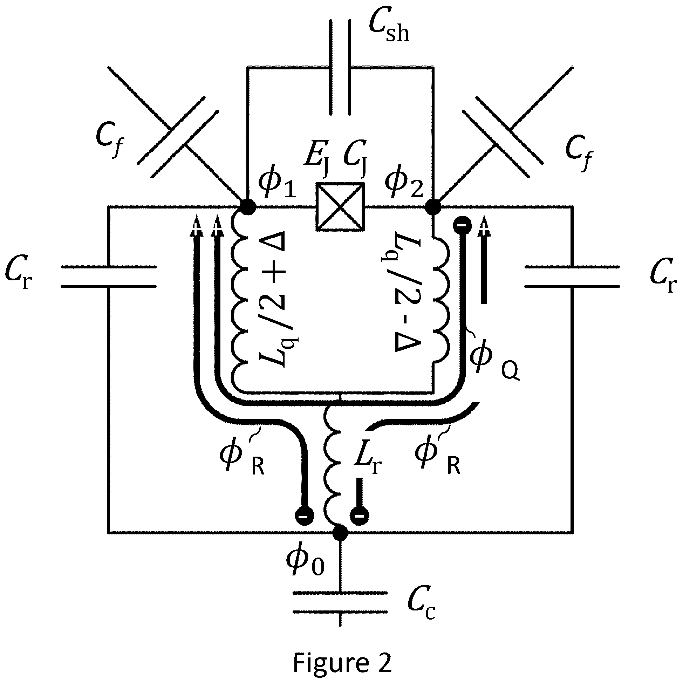

**Figure** 2 shows a lumped-element model of the exemplary qubit-readout circuit of Figure 1a. The nonlinear element 110 is characterised by the Josephson energy of the junction, *Eⱼ,* and the capacitance between its superconductors, *Cⱼ.*

The mutual capacitance between the first capacitive element 150 and the second capacitive element 160 is *Cₛₕ.* The mutual capacitance of each capacitive element 150, 160 with a respective neighbouring superconducting quantum circuit (not shown in Figures 1a, 1b) is *C_{f}.* The mutual capacitance between each capacitive element 150, 160 and the conductive element 130 is *Cᵣ.* The mutual capacitance between the conductive element 130 and a control circuit (not shown in Figures 1a, 1b) that couples it to the readout port, such as a Purcell filter resonator, is *C_{c}*.

The inductance of the first wiring section 120 is characterized by the inductance of its first and second higher-inductance portions, which are in series, thereby having an overall value of *L_{q}*, which dominates over the inductance of the lower-inductance portions. Similarly, the inductance of the second wiring section 140 is characterized by the inductance of its third higher-inductance portion, *Lᵣ*, that dominates over the inductance of the lower-inductance portions.

In the specific example of Figures 1a, 1b, the parameters of Figure 2 have the following values: *C_{f}* is 14 fF, *Cₛₕ* is 5 fF, *C_{c}* is 34 fF, *Cᵣ* is 7 fF, *Lᵣ* is 14 nH and *L_{q}* is 44 nH. More generally, the parameters of Figure 2 may be in the following ranges: *C_{f}* is between 5 and 25 fF, *Cₛₕ* between 1 and 25 fF, *C_{c}* between 10 and 35 fF, *Cᵣ* between 1 and 20 fF, *Lᵣ* between 0 and 50 nH, and *L_{q}* between 10 and 100 nH.

The flux variables at the first node, second node and third node are, respectively, *ϕ₀, ϕ₁, and ϕ₂.* Herein, a flux variable is the generalisation of the conventional magnetic flux and is defined as the time integral of the voltage. Each flux variable gives the flux at a node with respect to a common potential (e.g. ground). If *ϕ₀* is set to ground, there are two degrees of freedom for the superconducting quantum circuit 100, *ϕ₁ and ϕ₂.*

If the nonlinear part of the model given by the nonlinear element 110 is omitted, a linearised model of the superconducting quantum circuit 100 can be described as follows. If *C_{q} = Cⱼ + Cₛₕ,* and the degrees of freedom of the circuit are chosen to be *ϕ₁ and ϕ₂,* the Langrangian in the basis {1, 2} ${L}_{\left\{1, 2\right\}} = \frac{1}{2} {\dot{\vec{ϕ}}}_{\left\{1, 2\right\}}^{⊤} {C}_{\left\{1, 2\right\}} {\dot{\vec{ϕ}}}_{\left\{1, 2\right\}} - \frac{1}{2} {\vec{ϕ}}_{\left\{1, 2\right\}}^{⊤} {L}_{\left\{1, 2\right\}}^{- 1} {\vec{ϕ}}_{\left\{1, 2\right\}}$ is described by the capacitance and inverse inductance matrices ${C}_{\left\{1, 2\right\}} = \left(\begin{matrix}{C}_{r} + {C}_{q} & - {C}_{q} \\ - {C}_{q} & {C}_{r} + {C}_{q}\end{matrix}\right)$ ${L}_{\left\{1, 2\right\}}^{- 1} = \frac{1}{{L}_{r} {L}_{q 1} + {L}_{r} {L}_{q 2} + {L}_{q 1} {L}_{q 2}} \left(\begin{matrix}{L}_{q 2} + {L}_{r} & - {L}_{r} \\ - {L}_{r} & {L}_{q 1} + {L}_{r}\end{matrix}\right) ,$ where ${L}_{q 1} = \frac{{L}_{q}}{2} + Δ {L}_{q 2} = \frac{{L}_{q}}{2} - Δ .$

If the basis is modified from {1, 2} to {R, Q}, with ${ϕ}_{R} = \frac{1}{2} \left({ϕ}_{1}+{ϕ}_{2}\right)$ ${ϕ}_{Q} = {ϕ}_{1} - {ϕ}_{2}$ then the new inverse capacitance and inductance matrices in the basis {R, Q} read ${C}_{\left\{R, Q\right\}}^{- 1} = \left(\begin{matrix}\frac{1}{2 {C}_{r}} & 0 \\ 0 & \frac{1}{\frac{C}{2} + {C}_{q}}\end{matrix}\right)$ ${L}_{\left\{R, Q\right\}}^{- 1} = \frac{1}{{L}_{r} {L}_{q 1} + {L}_{r} {L}_{q 2} + {L}_{q 1} {L}_{q 2}} \left(\begin{matrix}{L}_{q} & - Δ \\ - Δ & \frac{{L}_{q}}{4} + {L}_{r}\end{matrix}\right)$

It can be seen that there is no capacitive coupling between these two modes, because the capacitance matrix is diagonal. The diagonalisation of the capacitance matrix is possible due to the symmetry of the superconducting quantum circuit 100. The modes R and Q correspond to the readout and qubit mode, respectively.

If also Δ were zero, there would be no coupling at all between *ϕ_{R}* and *ϕ_{Q}*, since also the inductance matrix would be diagonal. Indeed, if Δ is zero, then there is no inductive coupling between the readout mode and qubit mode for the following reasons. In the readout mode, the second and third node charge symmetrically. As a consequence, current flows from the first node through the second wiring section 140 and through each of the first and second branches 122, 124, but not across the nonlinear element 110, as shown by the arrows denoted with *ϕ_{R}* in Figure 2. In contrast to that, in the qubit mode current flows within the qubit loop, as shown by the arrow denoted with *ϕ_{Q}* in Figure 2, hence charging the second and third nodes with opposite signs. Accordingly, in the first branch 122 the current flows in the same direction both in the readout mode and the qubit mode, while in the second branch 124 the current flows in opposite directions in the readout mode and the qubit mode. For this reason, the inductive coupling in the first branch is equal and opposite to the inductive coupling in the second branch, so that they cancel out. If the loop branches differ in inductance, however, this is not the case and, as a result, Δ is the relevant parameter for designing the coupling.

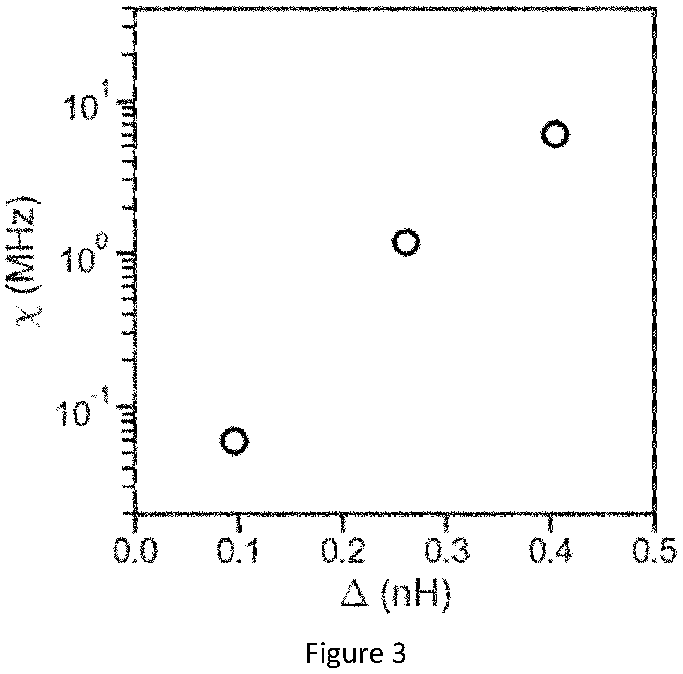

**Figure** 3 shows a plot of the dispersive shift as a function of the difference in kinetic inductance, namely of the inductive asymmetry. As explained above, the resonance frequency of the readout circuit is modified in virtue of its coupling to the qubit loop and a dispersive shift is introduced. Accordingly, the dispersive shift is a measure of the coupling.

The plot of Figure 3 shows three points, each corresponding to a measured dispersive shift for three different readout-qubit circuits having various differences in the kinetic inductance of the branches 122, 124. The three points are not on a line and the extrapolation of the dispersive shift at Δ=0 is vanishingly small. The lack of coupling between the readout and qubit mode when Δ is zero proves that the coupling is only caused by the inductive asymmetry and, thus, that there is no undesired capacitive coupling.

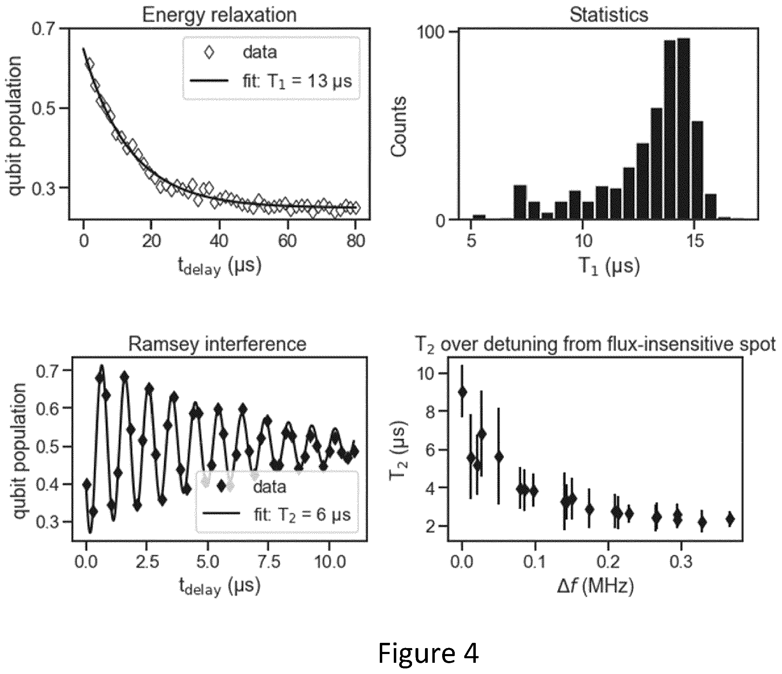

**Figure** 4 shows plots of the energy relaxation times and Ramsey decoherence times. Circuit quantum electrodynamics (cQED) experiments were performed with the superconducting quantum circuit 100. The energy relaxation times T₁ are measured to be in the range 5 µs to 15 µs. Ramsey decoherence times T₂ are measured to be in the range 5 µs to 10 µs at the external-flux-insensitive spot.

## Claims

1. A superconducting quantum circuit (100) comprising:
- a nonlinear element (110), wherein the nonlinear element (110) is a Josephson junction;
- a first wiring section (120) having a first end and a second end, wherein both the first end and the second end are connected to the nonlinear element (110);
- a conductive element (130);
- a second wiring section (140) connecting the conductive element (130) to the first wiring section (120);
- a first capacitive element (150) and a second capacitive element (160) identical to the first capacitive element (150);
- a third wiring section (170) connecting the first capacitive element (150) to the first wiring section (120); and
- a fourth wiring section (180) connecting the second capacitive element (160) to the first wiring section (120);
wherein:
the nonlinear element (110), the first wiring section (120), the conductive element (130), the second wiring section (140), the first capacitive element (150), the third wiring section (170) and the fourth wiring section (180) exhibit superconductive behaviour at an operating temperature of 4 K or less;
the first capacitive element (150) and the second capacitive element (160) are arranged such that a symmetry line (190) equidistant from the first capacitive element (150) and the second capacitive element (160) intersects the nonlinear element (110);
the first wiring section (120) is bisected into a first branch (122) and a second branch (124) by the symmetry line (190), the first branch (122) being geometrically identical to the second branch (124);
the first branch (122) has a first kinetic inductance, the second branch (124) has a second kinetic inductance, and the first kinetic inductance is different from the second kinetic inductance;
the second wiring section (140) substantially lies on the symmetry line (190) and does not contact the nonlinear element (110); and
the conductive element (130) is bisected by the symmetry line (190).

2. The superconducting quantum circuit (100) of claim 1, wherein the first wiring section (120) is made of a first material and a second material, the first material having a kinetic inductance different from the kinetic inductance of the second material.

3. The superconducting quantum circuit (100) of claim 2, wherein a first ratio of the amount of first material to the amount of second material in the first branch (122) is different from a second ratio of the amount of first material to the amount of second material in the second branch (124).

4. The superconducting quantum circuit (100) of claim 2 or 3, wherein the first material is a granular superconducting material and the second material is not a granular superconducting material.

5. The superconducting quantum circuit (100) of claim 4, wherein the first material is granular aluminium and the second material is aluminium.

6. The superconducting quantum circuit (100) of any one of the preceding claims, wherein the conductive element (130) comprises an enclosing portion (132) and the enclosing portion (132) has a shape and size such that an area defined by the extent of the enclosing portion (132) along the direction of the symmetry line (190) and by the extent of the enclosing portion (132) along the direction perpendicular to the symmetry line (190) accommodates at least the second wiring section (140), the first wiring section (120) and the nonlinear element (110).

7. The superconducting quantum circuit (100) of claim 6, wherein the area further accommodates the third wiring section (170), the fourth wiring section (180), the first capacitive element (150) and the second capacitive element (160).

8. The superconducting quantum circuit (100) of claim 6 or 7, wherein the enclosing portion (132) has a U-shape or square-U-shape.

9. The superconducting quantum circuit (100) of any one of the preceding claims, wherein the superconducting quantum circuit (100) does not comprise a screening component.

10. A readout-qubit chip comprising a substrate and the superconducting quantum circuit (100) of any one of claims 1 to 9, wherein the superconducting quantum circuit is formed on the substrate.

11. A device comprising:
at least one readout-qubit chip according to claim 10 positioned at a first level;
at least one control chip positioned at a second level, the control chip comprising one or more control circuits configured to enable manipulation of a state of the superconducting quantum circuit and to enable readout of the state of the superconducting quantum circuit; wherein:
the first level is separated from the second level by a separation distance, and
a surface of the at least one readout-qubit chip on which the superconducting quantum circuit is formed faces a surface of the control chip on which the one or more control circuits are formed.

12. The device of claim 11, wherein the one or more control circuits comprise:
a Purcell filter resonator configured to couple to the conductive element and to a readout port; and
a flux bias circuit configured to couple to the first wiring section and to a flux control port.

13. The device of claim 11 or claim 12, wherein the device comprises at least one pair of readout-qubit chips according to claim 10 positioned at the first level and the device further comprises at least one coupling chip positioned at the second level, wherein the coupling chip is configured to couple the at least one pair of readout-qubit chips.

14. A device comprising:
a dielectric substrate;
at least one superconducting quantum circuit (100) according to any one of claims 1 to 9; and
one or more control circuits configured to enable manipulation of a state of the superconducting quantum circuit and to enable readout of the state of the superconducting quantum circuit;
wherein the superconducting quantum circuit is formed on the dielectric substrate and the one or more control circuits are formed on the dielectric substrate so that the superconducting quantum circuit and the one or more control circuits are coplanar.

## Patentansprüche

1. Supraleitende Quantenschaltung (100), umfassend:
- ein nichtlineares Element (110), wobei das nichtlineare Element (110) ein Josephson-Kontakt ist;
- einen ersten Verdrahtungsbereich (120), der ein erstes Ende und ein zweites Ende aufweist, wobei sowohl das erste Ende als auch das zweite Ende mit dem nichtlinearen Element (110) verbunden sind;
- ein leitfähiges Element (130);
- einen zweiten Verdrahtungsbereich (140), der das leitfähige Element (130) mit dem ersten Verdrahtungsbereich (120) verbindet;
- ein erstes kapazitives Element (150) und ein zweites kapazitives Element (160), das mit dem ersten kapazitiven Element (150) identisch ist;
- einen dritten Verdrahtungsbereich (170), der das erste kapazitive Element (150) mit dem ersten Verdrahtungsbereich (120) verbindet; und
- einen vierten Verdrahtungsbereich (180), der das zweite kapazitive Element (160) mit dem ersten Verdrahtungsbereich (120) verbindet;
wobei:
das nichtlineare Element (110), der erste Verdrahtungsbereich (120), das leitfähige Element (130), der zweite Verdrahtungsbereich (140), das erste kapazitive Element (150), der dritte Verdrahtungsbereich (170) und der vierte Verdrahtungsbereich (180) bei einer Betriebstemperatur von 4 K oder weniger supraleitfähiges Verhalten vorweisen;
das erste kapazitive Element (150) und das zweite kapazitive Element (160) derart angeordnet sind, dass eine Symmetrielinie (190) in gleichem Abstand von dem ersten kapazitiven Element (150) und dem zweiten kapazitiven Element (160) das nichtlineare Element (110) schneidet; der erste Verdrahtungsbereich (120) in einen ersten Zweig (122) und einen zweiten Zweig (124) durch die Symmetrielinie (190) halbiert wird, wobei der erste Zweig (122) mit dem zweiten Zweig (124) geometrisch identisch ist;
der erste Zweig (122) eine erste kinetische Induktivität aufweist, der zweite Zweig (124) eine zweite kinetische Induktivität aufweist und sich die erste kinetische Induktivität von der zweiten kinetischen Induktivität unterscheidet;
der zweite Verdrahtungsbereich (140) im Wesentlichen auf der Symmetrielinie (190) liegt und das nichtlineare Element (110) nicht kontaktiert; und
das leitfähige Element (130) durch die Symmetrielinie (190) halbiert wird.

2. Supraleitende Quantenschaltung (100) nach Anspruch 1, wobei der erste Verdrahtungsbereich (120) aus einem ersten Material und einem zweiten Material hergestellt ist, wobei das erste Material eine kinetische Induktivität aufweist, die sich von der kinetischen Induktivität des zweiten Materials unterscheidet.

3. Supraleitende Quantenschaltung (100) nach Anspruch 2, wobei sich ein erstes Verhältnis der Menge von erstem Material zu der Menge von zweitem Material in dem ersten Zweig (122) von einem zweiten Verhältnis der Menge von erstem Material zu der Menge von zweitem Material in dem zweiten Zweig (124) unterscheidet.

4. Supraleitende Quantenschaltung (100) nach Anspruch 2 oder 3, wobei das erste Material ein granulares supraleitendes Material ist und das zweite Material kein granulares supraleitendes Material ist.

5. Supraleitende Quantenschaltung (100) nach Anspruch 4, wobei das erste Material granulares Aluminium ist und das zweite Material Aluminium ist.

6. Supraleitende Quantenschaltung (100) nach einem der vorstehenden Ansprüche, wobei das leitfähige Element (130) einen umschließenden Abschnitt (132) umfasst und der umschließende Abschnitt (132) eine derartige Form und Größe aufweist, dass eine Fläche, die durch die Ausdehnung des umschließenden Abschnitts (132) entlang der Richtung der Symmetrielinie (190) und durch die Ausdehnung des umschließenden Abschnitts (132) entlang der Richtung senkrecht zu der Symmetrielinie (190) definiert ist, mindestens den zweiten Verdrahtungsbereich (140), den ersten Verdrahtungsbereich (120) und das nichtlineare Element (110) aufnimmt.

7. Supraleitende Quantenschaltung (100) nach Anspruch 6, wobei die Fläche ferner den dritten Verdrahtungsbereich (170), den vierten Verdrahtungsbereich (180), das erste kapazitive Element (150) und das zweite kapazitive Element (160) aufnimmt.

8. Supraleitende Quantenschaltung (100) nach Anspruch 6 oder 7, wobei der umschließende Abschnitt (132) eine U-Form oder eine quadratische U-Form aufweist.

9. Supraleitende Quantenschaltung (100) nach einem der vorstehenden Ansprüche, wobei die supraleitende Quantenschaltung (100) keine Abschirmkomponente umfasst.

10. Auslese-Qubit-Chip, umfassend ein Substrat und die supraleitende Quantenschaltung (100) nach einem der Ansprüche 1 bis 9, wobei die supraleitende Quantenschaltung auf dem Substrat ausgebildet ist.

11. Vorrichtung, umfassend:
mindestens einen Auslese-Qubit-Chip nach Anspruch 10, der auf einer ersten Ebene positioniert ist;
mindestens einen Steuerchip, der auf einer zweiten Ebene positioniert ist, der Steuerchip umfassend eine oder mehrere Steuerschaltungen, die konfiguriert sind, um eine Manipulation eines Zustands der supraleitenden Quantenschaltung zu ermöglichen und um eine Auslesung des Zustands der supraleitenden Quantenschaltung zu ermöglichen; wobei:
die erste Ebene von der zweiten Ebene durch einen Trennabstand getrennt ist und
eine Oberfläche des mindestens einen Auslese-Qubit-Chips, auf der die supraleitende Quantenschaltung ausgebildet ist, einer Oberfläche des Steuerchips zugewandt ist, auf der die eine oder die mehreren Steuerschaltungen ausgebildet sind.

12. Vorrichtung nach Anspruch 11, wobei die eine oder die mehreren Steuerschaltungen umfassen:
einen Purcell-Filter-Resonator, der konfiguriert ist, um mit dem leitfähigen Element und mit einem Ausleseanschluss zu koppeln; und
eine Flussvorspannungsschaltung, die konfiguriert ist, um mit dem ersten Verdrahtungsbereich und mit einem Flusssteueranschluss zu koppeln.

13. Vorrichtung nach Anspruch 11 oder 12, wobei die Vorrichtung mindestens ein Paar von Auslese-Qubit-Chips nach Anspruch 10 umfasst, die auf der ersten Ebene positioniert sind, und die Vorrichtung ferner mindestens einen Kopplungschip umfasst, der auf der zweiten Ebene positioniert ist, wobei der Kopplungschip konfiguriert ist, um das mindestens eine Paar von Auslese-Qubit-Chips zu koppeln.

14. Vorrichtung, umfassend:
ein dielektrisches Substrat;
mindestens eine supraleitende Quantenschaltung (100) nach einem der Ansprüche 1 bis 9; und
eine oder mehrere Steuerschaltungen, die konfiguriert sind, um die Manipulation eines Zustands der supraleitenden Quantenschaltung zu ermöglichen und um die Auslesung des Zustands der supraleitenden Quantenschaltung zu ermöglichen;
wobei die supraleitende Quantenschaltung auf dem dielektrischen Substrat ausgebildet ist und die eine oder die mehreren Steuerschaltungen auf dem dielektrischen Substrat ausgebildet sind, sodass die supraleitende Quantenschaltung und die eine oder die mehreren Steuerschaltungen koplanar sind.

## Revendications

1. Circuit quantique supraconducteur (100) comprenant :
- un élément non linéaire (110), l'élément non linéaire (110) étant une jonction Josephson ;
- une première section de câblage (120) ayant une première extrémité et une seconde extrémité, la première extrémité et la seconde extrémité étant toutes deux connectées à l'élément non linéaire (110) ;
- un élément conducteur (130) ;
- une deuxième section de câblage (140) connectant l'élément conducteur (130) à la première section de câblage (120) ;
- un premier élément capacitif (150) et un second élément capacitif (160) identique au premier élément capacitif (150) ;
- une troisième section de câblage (170) connectant le premier élément capacitif (150) à la première section de câblage (120) ; et
- une quatrième section de câblage (180) connectant le second élément capacitif (160) à la première section de câblage (120) ;
dans lequel :
l'élément non linéaire (110), la première section de câblage (120), l'élément conducteur (130), la deuxième section de câblage (140), le premier élément capacitif (150), la troisième section de câblage (170) et la quatrième section de câblage (180) montrent un comportement supraconducteur à une température de fonctionnement de 4 K ou moins ;
le premier élément capacitif (150) et le second élément capacitif (160) sont agencés de telle sorte qu'une ligne de symétrie (190) équidistante du premier élément capacitif (150) et du second élément capacitif (160) coupe l'élément non linéaire (110) ; la première section de câblage (120) est divisée en une première branche (122) et une seconde branche (124) par la ligne de symétrie (190), la première branche (122) étant géométriquement identique à la seconde branche (124) ;
la première branche (122) a une première inductance cinétique, la seconde branche (124) a une seconde inductance cinétique, et la première inductance cinétique est différente de la seconde inductance cinétique ;
la deuxième section de câblage (140) se trouve sensiblement sur la ligne de symétrie (190) et n'est pas en contact avec l'élément non linéaire (110) ; et
l'élément conducteur (130) est divisé en deux par la ligne de symétrie (190).

2. Circuit quantique supraconducteur (100) selon la revendication 1, dans lequel la première section de câblage (120) est constituée d'un premier matériau et d'un second matériau, le premier matériau ayant une inductance cinétique différente de l'inductance cinétique du second matériau.

3. Circuit quantique supraconducteur (100) selon la revendication 2, dans lequel un premier rapport entre la quantité de premier matériau et la quantité de second matériau dans la première branche (122) est différent d'un second rapport entre la quantité de premier matériau et la quantité de second matériau dans la seconde branche (124).

4. Circuit quantique supraconducteur (100) selon la revendication 2 ou 3, dans lequel le premier matériau est un matériau supraconducteur granulaire et le second matériau n'est pas un matériau supraconducteur granulaire.

5. Circuit quantique supraconducteur (100) selon la revendication 4, dans lequel le premier matériau est de l'aluminium granulaire et le second matériau est de l'aluminium.

6. Circuit quantique supraconducteur (100) selon l'une quelconque des revendications précédentes, dans lequel l'élément conducteur (130) comprend une partie d'enveloppement (132) et la partie d'enveloppement (132) a une forme et une taille telles qu'une zone définie par l'étendue de la partie d'enveloppement (132) le long de la direction de la ligne de symétrie (190) et par l'étendue de la partie d'enveloppement (132) le long de la direction perpendiculaire à la ligne de symétrie (190) accueille au moins la deuxième section de câblage (140), la première section de câblage (120) et l'élément non linéaire (110).

7. Circuit quantique supraconducteur (100) selon la revendication 6, dans lequel la zone accueille en outre la troisième section de câblage (170), la quatrième section de câblage (180), le premier élément capacitif (150) et le second élément capacitif (160).

8. Circuit quantique supraconducteur (100) selon la revendication 6 ou 7, dans lequel la partie d'enveloppement (132) est en forme de U ou en forme de U carré.

9. Circuit quantique supraconducteur (100) selon l'une quelconque des revendications précédentes, dans lequel le circuit quantique supraconducteur (100) ne comprend pas de composant de blindage.

10. Puce de lecture de bit quantique comprenant un substrat et le circuit quantique supraconducteur (100) selon l'une quelconque des revendications 1 à 9, dans laquelle le circuit quantique supraconducteur est formé sur le substrat.

11. Dispositif comprenant :
au moins une puce de lecture de bit quantique selon la revendication 10 positionnée à un premier niveau ;
au moins une puce de commande positionnée à un second niveau, la puce de commande comprenant un ou plusieurs circuits de commande configurés pour permettre la manipulation d'un état du circuit quantique supraconducteur et pour permettre la lecture de l'état du circuit quantique supraconducteur ; dans lequel :
le premier niveau est séparé du second niveau par une distance de séparation, et
une surface de l'au moins une puce de lecture de bit quantique sur laquelle est formé le circuit quantique supraconducteur fait face à une surface de la puce de commande sur laquelle sont formés le ou les circuits de commande.

12. Dispositif selon la revendication 11, dans lequel le ou les circuits de commande comprennent :
un résonateur de filtre de Purcell configuré pour être couplé à l'élément conducteur et à un port de lecture ; et
un circuit de polarisation de flux configuré pour se coupler à la première section de câblage et à un port de commande de flux.

13. Dispositif selon la revendication 11 ou la revendication 12, le dispositif comprenant au moins une paire de puces de lecture de bit quantique selon la revendication 10 positionnée au premier niveau et le dispositif comprenant en outre au moins une puce de couplage positionnée au second niveau, dans lequel la puce de couplage est configurée pour coupler l'au moins une paire de puces de lecture de bit quantique.

14. Dispositif comprenant :
un substrat diélectrique ;
au moins un circuit quantique supraconducteur (100) selon l'une quelconque des revendications 1 à 9 ; et
un ou plusieurs circuits de commande configurés pour permettre la manipulation d'un état du circuit quantique supraconducteur et pour permettre la lecture de l'état du circuit quantique supraconducteur ;
dans lequel le circuit quantique supraconducteur est formé sur le substrat diélectrique et le ou les circuits de commande sont formés sur le substrat diélectrique de sorte que le circuit quantique supraconducteur et le ou les circuits de commande soient coplanaires.
